# EUROPÄISCHE PATENTANMELDUNG

(11) **EP 4 632 424 A1**
(43) Veröffentlichungstag der Anmeldung: **15.10.2025**
(21) Anmeldenummer: 25165382.0
(22) Anmeldetag: 21.03.2025
(51) Int. Cl.: G01S 5/04, G01B 11/00

(54) **VERFAHREN UND MESSEINRICHTUNG ZUM GENERIEREN VON DATENSÄTZEN ZUR VALIDIERUNG VON ABSTANDSBEZOGENEN FUNKTIONEN EINES OBJEKTES**

(30) Priorität: 21.03.2024 DE 102024108067; 20.06.2024 DE 102024117374
(71) Anmelder: Battenberg, Günther, 35274 Kirchhain (DE)
(72) Erfinder: Battenberg, Günther, 35274 Kirchhain (DE)
(74) Vertreter: Stoffregen, Hans-Herbert

(57) **Zusammenfassung**

Die Erfindung betrifft Verfahren und eine Messeinrichtung zum Generieren von Datensätzen vor, an und/oder in einem ersten Objekt, wie Fahrzeug, bei einer Interaktion mit einem zweiten Objekt, wie Mobiltelefon oder Funkschlüssel. Um abstandsbezogene Funktionen des ersten Objektes bei Annäherung des zweiten Objektes auf einfache Weise validieren zu können, werden folgende Verfahrensschritte vorgeschlagen:
• Positionieren des zweiten Objektes mittels der Messeinrichtung an Prüfpositionen im Bereich des ersten Objektes,
• Bestimmen von Koordinaten des zweiten Objektes für jede der Prüfpositionen mit einem Zeitstempel, insbesondere mittels der Messeinrichtung, und Speichern der Koordinaten des zweiten Objektes für jede der Prüfpositionen mit dem Zeitstempel als erste Daten,
• Bestimmen, mittels Sensoren des ersten Objektes, in jeder Prüfposition Abstände und/oder Position des zweiten Objektes relativ zu den Sensoren mit einem Zeitstempel, wobei die Sensoren ortsmäßig zueinander, zu dem ersten Objekt und zu der Messeinrichtung in Beziehung stehen und Speichern der Abstände und/oder Position für jede der Prüfpositionen mit dem Zeitstempel als zweite Daten und
• Generieren eines Datensatzes durch zeitliches Zusammenführen der ersten Daten und der zweiten Daten mit jeweils gleichem Zeitstempel.

## Beschreibung

Die Erfindung betrifft ein Verfahren zum Generieren von Datensätzen vor, an und/oder in einem ersten Objekt, wie Fahrzeug, bei einer Interaktion mit einem zweiten Objekt, wie Mobiltelefon oder Funkschlüssel, mittels einer Messeinrichtung zur Validierung von abstandsbezogenen Funktionen des ersten Objektes bei Annäherung des zweiten Objektes sowie eine Messeinrichtung zur Durchführung des Verfahrens.

Die US 2020/0216025 A1 betrifft ein solches Verfahren zum Bereitstellen eines Zugangs zu einem Fahrzeug unter Verwendung eines drahtlosen Zugangsgerätes. In dem Fahrzeug sind Beacon-Transceiver integriert, die von dem drahtlosen Zugangsgerät Beacon-Nachrichten empfangen. In diesem Zusammenhang wird ein Verfahren zum Trainieren eines maschinellen Lernprogramms zur Verwendung bei der Positionsbestimmung für das drahtlose Zugangsgerät vorgeschlagen.

Das Verfahren umfasst das Positionieren des drahtlosen Zugangsgerätes mit einem Roboter an bekannten Positionen. Die von zwei oder mehr Beacon-Transceivern des Fahrzeugs für eine bekannte Position empfangenen Beacon-Nachrichten werden abgerufen. Die bekannte Position ist eine Position, von der aus ein drahtloses Zugriffsgerät Beacon-Nachrichten überträgt. Der Empfang von Beacon-Nachrichten wird an einer Vielzahl bekannter Positionen mehrmals wiederholt, um eine Sammlung von Trainingsdaten zu generieren. Eine Verarbeitungslogik stellt Hochfrequenzsignaldaten, wie etwa empfangene Signalstärken, aus den erhaltenen Beacon-Nachrichten und den zugehörigen Positionsdaten des drahtlosen Zugangsgeräts, wie etwa von einem Sekundärgerät relativ zu dem Fahrzeug verfolgte x-, y-, und z- Positionen einem Trainer für maschinelles Training zur Verfügung. Die Trainingsdaten können in einer Datenbank gespeichert werden.

Die US 2021/0341563 A1 betrifft ein Verfahren zur Positionserfassung in Innenräumen. Das Verfahren benutzt eine Vielzahl von Standortsensoren, die mit einem Sensorgerät, wie Mobiltelefon einer Person, Identifikations- und Standortnachrichten austauschen. Für jeden Satz von Nachrichten, die an einem gegebenen Standort erfasst werden, werden Identifizierungsinformationen, Signalstärke und Zeitstempel ermittelt. Die erfassten Daten umfassen beispielsweise Identifizierungsinformationen eines Standortsensors, dem die Daten entsprechen; Informationen zum Indikator der empfangenen Signalstärke (RSSI) bezüglich eines vom Sensorgerät empfangenen Signals; eine (X, Y)-Position, die dem Standort des Sensorgeräts beim Erfassen der Daten entspricht; und einen Zeitstempel, der dem Zeitpunkt des Signalempfangs durch das Sensorgerät entspricht.

Die DE 10 2006 044 293 A1 betrifft ein Verfahren zur rechnergestützten Lokalisation eines mobilen Objekts mit Hilfe eines merkmalsbasierten Ortungsverfahrens, mit dem die Merkmale von mehreren Basisstationen gemessen werden und hieraus unter Verwendung einer Referenzkarte die Position des Objekts geortet wird, wobei das Merkmal einer Basisstation ein von der Basisstation ausgesendetes Feld am Objekt oder ein vom Objekt ausgesendetes Feld an der Basisstation charakterisiert.

Die DE 10 2019 135 665 A1 betrifft ein Verfahren zur Kalibrierung einer Positionserfassung eines tragbaren Schlüsselelements durch ein Zugangssteuerungssystem für ein Kraftfahrzeug. Das Zugangssteuerungssystem weist eine Erfassungsvorrichtung auf, welche zum Erfassen einer Position des Schlüsselelements relativ zu dem Kraftfahrzeug mittels Funk ausgebildet ist. Das Verfahren weist ein Erzeugen eines ersten Auslösesignals, wenn das Schlüsselelement in einer ersten Position relativ zu dem Kraftfahrzeug lokalisiert ist, und ein Erfassen einer ersten Signalstärke in Reaktion auf das erste Auslösesignal auf. Bei dem Verfahren wird eine Korrelation von Signalstärke und Distanz des Schlüsselelements relativ zu dem Kraftfahrzeug in Abhängigkeit von der ersten Signalstärke bei der ersten Position bestimmt.

Die DE 11 2018 000 346 T2 betrifft ein Verfahren und eine Vorrichtung, mit denen eine mobile Vorrichtung (z. B. ein Keyless-Go-Schlüssel oder eine elektronische Unterhaltungsvorrichtung, wie ein Mobiltelefon, eine Uhr oder ein anderes tragbares Gerät) mit einem Fahrzeug derart interagieren kann, dass ein Standort der mobilen Vorrichtung durch das Fahrzeug bestimmt werden kann, wodurch eine bestimmte Funktionalität des Fahrzeugs ermöglicht wird. Eine Vorrichtung kann sowohl (eine) HF-Antenne(n) und (eine) magnetische Antenne(n) zum Bestimmen einer Position einer mobilen Vorrichtung in Bezug auf das Fahrzeug einschließen.

Die US 11,290,977 B1 betrifft ein autonomes mobiles Gerät, welches sich innerhalb eines physischen Raums bewegt. Es können verschiedene drahtlose Geräte mit Sendern vorhanden sein, z. B. Geräte des Internets der Dinge (IoT), Smartphones, Tablets, Benutzergeräte usw. An verschiedenen physischen Standorten im physischen Raum empfängt ein Funkempfänger des mobilen Geräts Funksignale, die von Datensendern gesendet werden. Es werden Daten gespeichert, die den physischen Standort angeben, an dem die Daten erfasst wurden, sowie eine Kennung des Senders und eine Angabe zur empfangenen Signalstärke (RSSI). Die geschätzten Entfernungen, jeweils in Bezug auf einen anderen physischen Standort, werden basierend auf der empfangenen Signalstärke bestimmt. Eine Vielzahl der geschätzten Entfernungen und zugehörigen physischen Standorte werden verwendet, um den geschätzten Standort eines Senders zu bestimmen.

Die EP 2 216 144 A1 betrifft ein Verfahren und ein System zur Kontrolle von Bauteilen und/oder Funktionseinheiten mit einer Prüfvorrichtung anhand definierter Prüfaufgaben. Dabei ist vorgesehen, dass jedes Bauteil und/oder jede Funktionseinheit mittels eines CAD-Systems erstellt wird und dass beim Erstellen eines Bauteils und/oder einer Funktionseinheit im CAD-System eine dem Bauteil und/oder der Funktionseinheit zugeordnete Prüfaufgabe definiert wird, wobei jeder Prüfaufgabe Qualitätsmerkmale zugeordnet sind. Die Prüfaufgabe wird in einem virtuellen Funktionsraum definiert, wobei aufgrund der Prüfaufgabe für die die Prüfaufgabe ausführende Prüfvorrichtung ein die Prüfaufgabe enthaltendes Bewegungsprogramm erstellt wird. Die Bewegung der Prüfvorrichtung wird in dem die Prüfaufgabe zugeordneten virtuellen Funktionsraum simuliert und danach wird die jedem Bauteil und/oder jeder Funktionseinheit zugeordnete Prüfaufgabe von der Prüfvorrichtung in einem realen Funktionsraum automatisiert durchgeführt.

Bei den Qualitätsmerkmalen handelt es sich um geometrische, kinematische, haptische, optische und/oder akustische Eigenschaften.

Das System hat eine mobile Prüfvorrichtung in Form eines mobilen Roboters, umfassend eine Antriebseinheit, mit welcher die mobile Prüfvorrichtung vorzugsweise selbst- oder ferngesteuert bewegbar ist. Des Weiteren hat die Prüfvorrichtung wenigstens einen Prüfsensor. Dies kann ein geometrischer, kinematischer, haptischer, optischer und/oder akustischer Sensor sein.

Das System hat des weiteren Mittel zum Ausrichten der Prüfvorrichtung in einem realen Funktionsraum. Dabei kann es sich zum einen um Sensoren handeln, die eine grobe Annäherung der mobilen Prüfvorrichtung an das komplexe Erzeugnis, die Funktionseinheit bzw. das Bauteil ermöglichen.

Das bekannte Konzept basiert auf der Definition von Aufgaben in fahrzeugbasierten Funktionsräumen, der Ableitung von qualitätsgesteuerten Handlungsweisen, Referenzbahnen und Referenzpunkten, der Kopplung eines Roboters mit oder an einem Fahrzeug und der Durchführung von der Fertigungs-, Montage- und/oder Prüfaufgaben in Echtzeit.

Die DE 10 2022 102 148 A1 befasst sich mit einem Fahrzeug, und insbesondere mit einem Fahrzeug mit einer Mehrzahl von Ultra-Wideband (UWB, Ultra-Breitband)-Antennenmodulen sowie einem entsprechenden Verfahren und Computerprogramm. Die Mehrzahl von Antennenmodulen umfasst eine erste Teilmenge von ein oder mehreren Antennenmodulen und eine zweite Teilmenge von ein oder mehreren Antennenmodulen. Das Fahrzeug umfasst ein Kontrollgerät zur Auswertung eines über die Mehrzahl von Antennenmodulen empfangenen UWB-Signals eines Sende-Empfängers. Das Kontrollgerät ist ausgebildet zum Bestimmen einer Empfangsrichtung des Signals in einer ersten Ebene basierend auf über die Antennenmodule der ersten Teilmenge empfangenen Signalanteilen des Signals. Das Kontrollgerät ist ausgebildet zum Bestimmen einer Empfangsrichtung des Signals in einer zweiten Ebene basierend auf über die Antennenmodule der zweiten Teilmenge empfangenen Signalanteilen des Signals. Die erste Ebene ist senkrecht zu der zweiten Ebene ausgerichtet. Das Kontrollgerät ist ausgebildet zum Bestimmen einer Position des Sende-Empfängers relativ zu dem Fahrzeug basierend auf der Empfangsrichtung des Signals in der ersten Ebene und basierend auf einer Empfangsrichtung des Signals in der zweiten Ebene.

Die DE 10 2022 101 465 A1 betrifft ein Verfahren zum Lokalisieren einer Benutzervorrichtung unter Verwendung einer Laufzeit (ToF)-Antennenanordnung, die an einem Fahrzeug angeordnet ist. Das Verfahren beinhaltet ein Bestimmen, über eine ToF-Lokalisierungssteuerung, dass die Benutzervorrichtung weniger als eine Schwellenentfernung von dem Fahrzeug entfernt ist, ein Bestimmen eines Ankunftswinkels über die ToF-Lokalisierungssteuerung und die ToF-Antennenanordnung und ein Erzeugen eines Entriegelungssignals, das eine Fahrzeugtür entriegelt, als Reaktion auf das Bestimmen, dass die Benutzervorrichtung weniger als die Schwellenentfernung von der Fahrzeugtür entfernt ist.

Die DE 10 2019 212 231 A1 betrifft ein Verfahren zur Tür- oder Klappenbedienung bei einem Fahrzeug, ein Authentifizierungselement sowie ein Fahrzeug. Bei einem Verfahren zur Tür- oder Klappenbedienung bei einem Fahrzeug ist das Fahrzeug mit einer Vorrichtung zur Zugriffskontrolle ausgestattet, mit der erfasst wird, ob die Bedienpersonen sich mit einem Authentifizierungselement in einem Annäherungsbereich um das Fahrzeug herum befindet. Die Vorrichtung ist dabei mit wenigstens einem Kommunikationsmodul ausgestattet, das zur drahtlosen Kommunikation mit dem Authentifizierungselement ausgebildet ist. Bei der Kommunikation wird eine Zugriffsberechtigungsinformation von dem Authentifizierungselement zur Vorrichtung übertragen, die in der Vorrichtung überprüft wird, und wobei nach Verifikation der Zugriffsberechtigungsinformation der Zugriff auf die Vorrichtung gewährt wird. Dabei ist vorgesehen, dass erfasst wird, ob die Bedienpersonen sich im Nahbereich der zu bedienenden Tür oder Klappe befindet und dass erfasst wird, ob die Bedienperson im Nahbereich zur Tür- oder Klappenbedienung eine Bedienungsgeste vollzieht.

Die EP 3 711 909 A2 betrifft ein Verfahren zur Durchführung zumindest eines Tätigkeitsprozesses mittels eines Roboters an einem Objekt, umfassend die Verfahrensschritte Zurverfügungstellung von ersten Daten des Objekts oder eines Objektbereichs oder eines Modells von dem Objekt oder dem Objektbereich in einem ersten Koordinatensystem, Lokalisieren des Objektes oder des Objektbereichs zur Ermittlung von zweiten Daten in einem zweiten Koordinatensystem, mittels eines von dem Roboter ausgehenden Prüfkopf, Transformieren der ersten Daten in das zweite Koordinatensystem, Bewegen des Roboters oder eines Teils von diesem in dem zweiten Koordinatensystem und Durchführen des zumindest einen Tätigkeitsprozesses an dem Objekt oder dem Objektbereich durch Vorgabe von in das zweite Koordinatensystem transformierten ersten Daten.

Der Erfindung liegt die Aufgabe zugrunde, ein Verfahren und eine Messeinrichtung der eingangs genannten Art derart weiterzubilden, um die Nachteile des Standes der Technik zu vermeiden und ein Verfahren zu schaffen, welches die Prüfabläufe komplexer Funktionen deutlich verbessert. Das Verfahren soll insbesondere die Validierung von Annäherungsfunktionen eines Objektes ermöglichen.

Die Aufgabe wird gemäß der Erfindung u. a. durch die Merkmale des Anspruchs 1 gelöst.

Das Verfahren umfasst die Verfahrensschritte:
- Positionieren des zweiten Objektes mittels der Messeinrichtung an Prüfpositionen im Bereich des ersten Objektes,
- Bestimmen von Koordinaten des zweiten Objektes für jede der Prüfpositionen mit einem Zeitstempel, insbesondere mittels der Messeinrichtung, und Speichern der Koordinaten des zweiten Objektes für jede der Prüfpositionen mit dem Zeitstempel als erste Daten,
- Bestimmen, mittels Sensoren des ersten Objektes, in jeder Prüfposition Abstände und/oder Position des zweiten Objektes relativ zu den Sensoren mit einem Zeitstempel, wobei die Sensoren ortsmäßig zueinander, zu dem ersten Objekt und zu der Messeinrichtung in Beziehung stehen und Speichern der Abstände und/oder Position für jede der Prüfpositionen mit dem Zeitstempel als zweite Daten und
- Generieren eines Datensatzes durch zeitliches Zusammenführen der ersten Daten und der zweiten Daten mit jeweils gleichem Zeitstempel.

Durch das erfindungsgemäße Verfahren hat ein Fahrzeughersteller erstmals die Möglichkeit, Abstandsfunktionen auf der Basis von generierten Datensätzen zu validieren. Der Fahrzeughersteller kann auf der Basis der Datensätze über die mittels der Sensoren gemessenen realen Abstände und/oder Positionen des zweiten Objektes und die durch die Messeinrichtung gemessenen Koordinaten eine Zuordnung zu der realen Position des zweiten Objektes durchführen. Es kann in Bewegung, insbesondere des zweiten Objektes, ein kontinuierliches Messen erfolgen.

Die ortsmäßige Beziehung der Sensoren wird vorzugsweise eingelernt oder eingemessen, indem das zweite Objekt mittels der Messeinrichtung über zuvor in einem CAD-System eingelernte Bereiche, wie Oberflächenbereiche, des ersten Objektes geführt wird, wobei die Messeinrichtung ein Startsignal liefert, so dass während Messfahrten die Positions- und Entfernungsdaten der Sensoren zeitgenau mit den Prüfpositionen aufgezeichnet werden.

Besonders bevorzugt erfolgt die Bestimmung der Abstände und/oder der Position des ersten Objektes in Form eines Sender-Empfängers, insbesondere Mobiltelefon oder Funkschlüssel, über ein die Sensoren aufweisendes Ankersystem, welches eine Mehrzahl von Sensoren in Form von Ultra-Wideband (UWB, Ultra-Breitband)-Antennenmodule aufweist, die in dem ersten Objekt, wie Fahrzeug, z. B in Stoßstangen, Türen, Armaturenbrett, Dachflächen, Kofferraum, Motorraum, angeordnet sind.

Das erste Objekt umfasst vorzugsweise eine Steuereinheit, die ausgebildet ist, eines über die Mehrzahl von Antennenmodulen empfangenen UWB-Signals des Sende-Empfängers auszuwerten und eine Position oder einen Abstand des Sende-Empfängers relativ zu dem ersten Objekt zu bestimmen und die Position oder die Abstände in der Steuereinheit als die zweiten Daten zu speichern oder über eine Kommunikationsverbindung an die Messeinrichtung zu übertragen.

Gemäß einer bevorzugten Verfahrensweise werden das erste Objekt, das zweite Objekt sowie die Messeinrichtung aus einem CAD-System abgeleitet, wobei der gesamte Prüfablauf und alle Wege- und Prüfpositionen für die Messeinrichtung in einer virtuellen Simulation erstellt und optimiert wird und wobei vorzugsweise die optimierten Simulationsergebnisse in die Steuerung der Messeinrichtung übertragen werden.

Eine weitere bevorzugte Verfahrensweise sieht vor, dass das zeitlich genaue Zusammenführen der ersten und zweiten Daten dadurch erfolgt, dass die ersten Daten, d. h. die Koordinaten bzw. die Position des zweiten Objektes und/oder der Messeinrichtung, mit einem ersten Zeitstempel aufgezeichnet werden und dass die zweiten Daten, d. h. die von den Sensoren gemessenen Abstände und/oder gemessene Position, mit einem zweiten Zeitstempel aufgezeichnet werden.

Besonders bevorzugt wird das zweite Objekt mittels eines mobilen, selbstfahrenden Roboters als die Messeinrichtung positioniert. Dabei kann das zweite Objekt, wie Mobiltelefon oder Funkschlüssel, von einer Roboterhand eines von dem mobilen Roboter ausgehenden Roboterarms gehalten oder an einem auf dem mobilen Roboter angeordneten, vorzugsweise drehbaren, Dummy positioniert sein, der vorzugsweise Dämpfungseigenschaften eines menschlichen Körpers simuliert.

Vorzugsweise wird das erste Objekt, wie Fahrzeug, durch den mobilen Roboter eingemessen, indem Positionen von Markern bestimmt werden, die auf dem ersten Objekt angeordnet, wie aufgeklebten, sind. Vorzugsweise wird eine in der Roboterhand des mobilen Roboters integrierte Kamera nacheinander auf den Markern positioniert, wobei ein in der Roboterhand integrierter Laser einen Laserstrahl auf einen der Marker, vorzugsweise auf den Mittelpunkt, ausrichtet.

Der mobile Roboter kann im Außenbereich über ein Outdoor-Navigationssystem, wie GPS-System, navigieren. Alternativ kann der mobile Roboter im Innenbereich über ein Indoor-Navigationssystem, wie Zeroky-System, navigieren, wobei Sensoren, wie Ultraschallsensoren, einerseits an dem mobilen Roboter und andererseits in einem den mobilen Roboter umgebenden Gebäude angeordnet sind.

Alternativ wird das erste Objekt, wie Fahrzeug, durch ein Navigationssystem, wie Zeroky-System, eingemessen, wobei erste Sensoren, wie Ultraschallsensoren, auf dem ersten Objekt, wie Dachoberfläche, angeordnet werden, deren Positionen über Sender, wie Ultraschallsender, die in dem das erste Objekt aufnehmenden Gebäude, z. B: an der Gebäudedecke oder in Standsäulen, installiert sind, erfasst werden.

Vorzugsweise wird der mobile Roboter über das Indoor-Navigationssystem in eine Messebene eingemessen, um die genauen Koordinaten des zweiten Objektes an der Roboterhand oder an dem Dummy zu bestimmen.

Gemäß der Erfindung ist vorgesehen, dass das Positionieren des zweiten Objektes ein Annähern des zweiten Objektes in Richtung eines Koordinatenmittelpunktes des ersten Objektes umfasst, wobei die Koordinaten des zweiten Objektes und die Daten der Sensoren des ersten Objektes simultan aufgezeichnet werden und/oder dass das Positionieren des zweiten Objektes ein Positionieren des zweiten Objektes in definierten Prüfpositionen, z. B. Punktgitter, umfasst, wobei in jeder Prüfposition in dem ersten Objekt die zweiten Daten erzeugt werden und/oder dass das Positionieren des zweiten Objektes ein Abfahren von Oberflächen des ersten Objektes mit dem zweiten Objekt umfasst und/oder dass das Positionieren des zweiten Objektes ein Bewegen des zweiten Objektes entlang definierter Prüfpunkte in Richtung auf eine Oberfläche, wie Fensterfläche, des ersten Objektes und/oder in einen Innenraum des ersten Objektes hinein umfasst.

Vorzugsweise wird das zweite Objekt über zuvor in der Simulation eingelernte Prüfabläufe im Innern des ersten Objektes positioniert, wobei die Daten der Anker aufgezeichnet werden um die Positionierung des zweiten Objektes zu validieren. Die Daten der Anker können in Verbindung mit den Koordinaten des Roboters verwendet werden, um zu erkennen, ob sich das zweite Objekt im Innenraum befindet oder nicht. Auch kann die Position des zweiten Objektes im Innenraum des ersten Objektes für die genaue Bestimmung der Position des zweiten Objektes benutzt werden.

Die in dem ersten Objekt aufgezeichneten Daten werden vorzugsweise mit den in dem mobilen Roboter aufgezeichneten Daten synchronisiert. Zur Synchronisation der Daten wird eine Kommunikation, vorzugsweise eine drahtlose Kommunikation, zwischen dem ersten Objekt und dem Roboter durchgeführt, insbesondere ein Starten, Lesen und/oder Stoppen der in dem ersten Objekt erzeugten Daten.

Des Weiteren betrifft die Erfindung eine Messeinrichtung zum Generieren von Datensätzen vor, an und/oder in einem ersten Objekt, wie Fahrzeug, bei einer Interaktion mit einem zweiten Objekt, wie Mobiltelefon oder Funkschlüssel, zur Validierung von abstandsbezogenen Funktionen des ersten Objektes bei Annäherung des zweiten Objektes, wobei die Messeinrichtung ausgebildet ist:
- Zum Positionieren des zweiten Objektes an Prüfpositionen im Bereich des ersten Objektes,
- Zum Bestimmen von Koordinaten des zweiten Objektes für jede der Prüfpositionen mit einem Zeitstempel und Speichern der Koordinaten des zweiten Objektes für jede der Prüfpositionen mit dem Zeitstempel als erste Daten,
- Zum Empfangen von zweiten Daten, in Form von Abständen und/oder einer Position des zweiten Objektes relativ zu Sensoren des ersten Objekts für jede der Prüfpositionen, die mittels der Sensoren des ersten Objektes, die ortsmäßig zueinander, zu dem ersten Objekt und zu der Messeinrichtung in Beziehung stehen, mit einem Zeitstempel bestimmt werden und zum Speichern der zweiten Daten mit dem Zeitstempel,
- Zum Generieren eines Datensatzes durch zeitliches Zusammenführen der ersten Daten und der zweiten Daten mit jeweils gleichem Zeitstempel.

Vorzugsweise ist die Messeinrichtung ein mobiler, selbstfahrender Roboter, wobei das zweite Objekt, wie Mobiltelefon oder Funkschlüssel, von einer Roboterhand eines von dem mobilen Roboter ausgehenden Roboterarms gehalten oder an einem auf dem mobilen Roboter angeordneten, vorzugsweise drehbaren, Dummy positioniert ist.

Der Dummy ist ausgebildet, um Eigenschaften eines menschlichen Körpers, wie Dämpfungseigenschaften elektromagnetischer Strahlung, zu simulieren.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1: eine schematische Darstellung einer Prüfvorrichtung zum Prüfen von Funktionen eines ersten Objektes, die ausgelöst werden, wenn sich ein zweites Objekt in einem definierten Abstand oder Bereich zu dem ersten Objekt befindet oder in diesen eintritt,
- Fig. 2 a): eine Vorderansicht der Prüfvorrichtung gemäß Fig. 1,

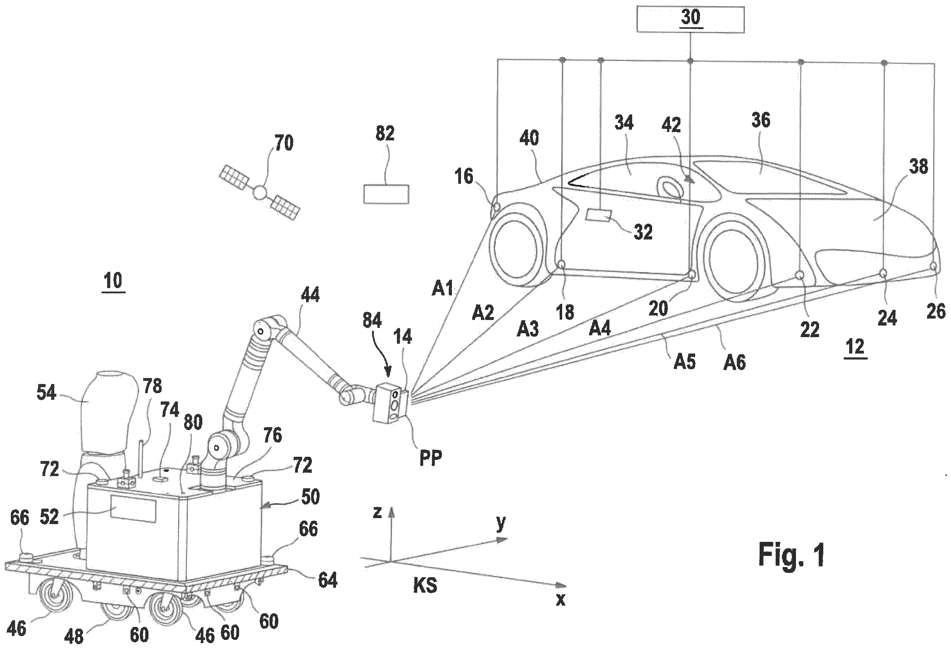

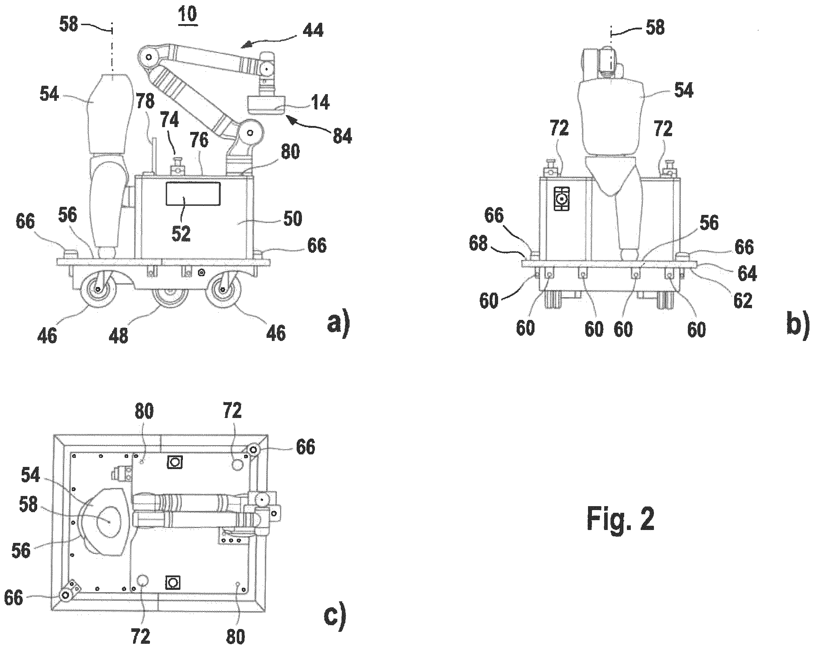

- Fig. 2 b): eine Seitenansicht der Prüfvorrichtung gemäß Fig. 1,
- Fig. 2 c): eine Draufsicht der Prüfvorrichtung gemäß Fig. 1,

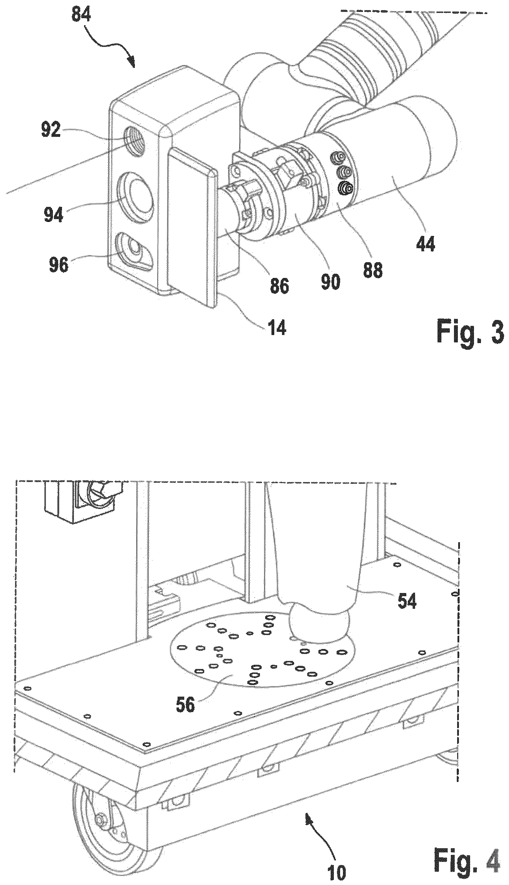

- Fig. 3: eine perspektivische Darstellung eines Prüfkopfes der Prüfvorrichtung,
- Fig. 4: eine perspektivische Darstellung einer Drehvorrichtung der Prüfvorrichtung zum Drehen einer Körperattrappe (Dummy),

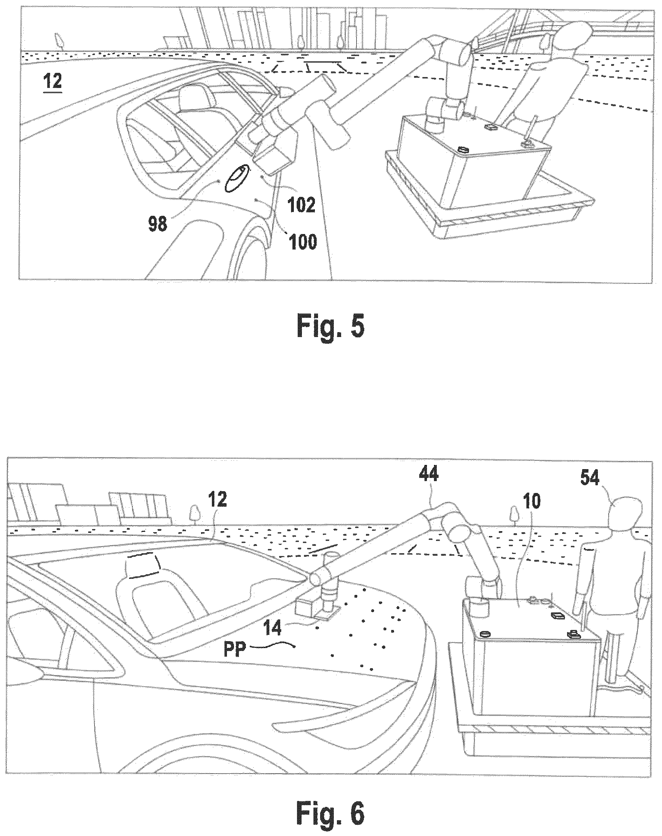

- Fig. 5: eine schematische Darstellung der Prüfvorrichtung beim Einmessen in ein Koordinatensystem des ersten Objektes und
- Fig. 6: eine schematische Darstellung der Prüfvorrichtung bei der Durchführung von Messungen vor, an und/oder in dem ersten Objekt.

Fig. 1 zeigt eine Messeinrichtung 10 in Form eines mobilen Roboters zum Generieren von Datensätzen in Form von Messkoordinaten vor, an und/oder in einem ersten Objekt 12, nachfolgend Fahrzeug genannt, insbesondere zum Prüfen von Annäherungsfunktionen, wie Smart-Access-Funktionen, bei Annäherung eines zweiten Objektes 14, nachfolgend Benutzerobjekt genannt, in Form eines Sender-Empfängers, insbesondere eines Mobiltelefons oder Funkschlüssels, an das erste Objekt 12 mittels der Messeinrichtung 10.

Das Fahrzeug 12 umfasst ein Ankersystem aus Sensoren 16 bis 26 in Form von Ultra-Wideband (UWB, Ultra-Breitband)-Antennenmodulen, die an internen und externen Positionen, wie Stoßstangen, Türen, Armaturenbrett, Dachfläche, Kofferraum, Motorraum, des Fahrzeugs 12 angeordnet sind. Die Sensoren 16 bis 26 sind über ein Bussystem 28, wie CAN-Bus, mit einer Steuereinheit 30 des Fahrzeugs 12verbunden. Die Steuereinheit 30 ist ausgebildet, eines über die Mehrzahl von Antennenmodulen 16 bis 26 empfangenen UWB-Signals des Benutzerobjektes 14 zu empfangen. Die Steuereinheit 30 ist ferner ausgebildet, eine Position des Benutzerobjektes 14 relativ zu dem Fahrzeug 12 zu bestimmen. Die Position wird in der Steuereinheit 30 gespeichert oder über eine Kommunikationsverbindung an die Messeinrichtung 10 übertragen.

Damit das Ankersystem die genaue Position bestimmen kann, werden die Sensoren 16 bis 26 eingelernt, indem das Benutzerobjekt 14 mittels der Messeinrichtung über eine zuvor in einer Simulation eingelernte Oberfläche des Fahrzeugs 12 geführt wird, wobei die Messeinrichtung 10 ein Startsignal liefert, so dass während der Messfahrten die Positions- und Entfernungsdaten der Module 16 bis 26 mit den Prüfpositionen aufgezeichnet und zeitgenau zugeordnet werden können.

Sobald die Sensoren 16 bis 26 das Benutzerobjekt 14 in bestimmten Abständen außerhalb des Fahrzeugs 12, oder unmittelbar vor einer Scheibe 34, 36, einer Motorhaube 38, in einem Kofferraum 40 oder an bestimmten Innenraumpositionen 42 erkannt haben, werden in der Steuereinheit 30 bestimmte Funktionen abgefragt oder eingeleitet, wie z. B. ob die Module 16 bis 26 des Fahrzeugs 12 die Position des Benutzerobjektes 14 erkannt haben und die entsprechende Funktion an vorbestimmten Zonen und Abständen auslöst, ob sich das Benutzerobjekt 14 innerhalb oder außerhalb des Fahrzeugs 12 befindet und/oder an welchen Positionen sich das Benutzerobjekt 14 im Fahrzeug 12 befindet.

Die Auslösung der Funktion in dem Fahrzeug 12 kann von verschiedenen Faktoren beeinflusst werden. So kann eine elektromagnetische oder optische Kommunikationsverbindung zwischen den Modulen 16 bis 26 und dem Bedienerobjekt 14 bei Annäherung einer Bedienperson gestört oder beeinträchtigt sein. Beispielsweise kann sich das Bedienerobjekt 14 in einer Hand einer Bedienperson, einer Brusttasche, einer Hosentasche oder Handtasche befinden, so dass eine Funkverbindung beeinträchtigt ist. Somit könnte eine Auslösung der Funktion in verschiedenen Abständen bzw. Zonen erfolgen, die mittels des erfindungsgemäßen Verfahrens bei verschiedenen Bedingungen geprüft werden können.

Gemäß der Erfindung werden Datensätze vor, an und in dem Fahrzeug generiert, welche die Koordinaten des Benutzerobjektes und die von den Sensoren gemessenen Positions- und/oder Entfernungsdaten für jede Prüfposition zeitgenau zusammenführen. Mit den Datensätzen können vorgeschriebene positions- und/oder abstandsbezogene Funktionen validiert werden.

Die Fig. 2a) bis 2c) zeigen die Messeinrichtung 10 in Vorder-, Seiten- und Draufansicht. Die Messeinrichtung 10 ist als ein mobiler Roboter (Autonomus Mobile Robot (AMR)) ausgebildet und umfasst einen vorzugsweise 7-Achs-Knickarm-Roboterarm 44, der auf einem auf Rädern 46 fahrbaren und mittels eines elektrischen Antriebs 48 selbstfahrenden Fahrgestell 50 angeordnet ist. Die Messeinrichtung 10 umfasst zudem eine Robotersteuerung 52 zur Steuerung der Aktoren und/oder Sensoren des mobilen Roboters 10 und zur Erfassung, Speicherung und Verarbeitung von Daten. Die Robotersteuerung 52 kann über eine drahtlose Kommunikationsverbindung, wie WLAN, eine oder drahtgebundene Kommunikationsverbindung in Form eines Interfaces, wie CAN-Interface, mit der Steuereinheit 30 des Fahrzeugs 12 gekoppelt sein. In dem Fahrgestell 50 sind weitere Komponenten (nicht dargestellt), wie Antriebssteuerung, Energieversorgung, wie Batterie, Rechnereinheit angeordnet.

Gemäß einer eigenerfinderischen Ausführung ist auf dem Fahrgestell 50 eine Attrappe 54, die auch als Dummy bezeichnet werden kann, eines menschlichen Körpers angeordnet, die mittels eines Drehtellers 56 um ihre Längsachse 58 drehbar ist. Die Attrappe 54 bildet Eigenschaften des menschlichen Körpers, wie Dämpfungseigenschaften für elektromagnetische Strahlung, nach. Mittels des Dummys 54 können verschiedene Szenarien einer Positionierung des Benutzerobjektes 14 geprüft werden, z. B. Positionierung des Benutzerobjektes 14 in einer Brusttasche, einer Hosentasche oder einer Hand des Dummys. Durch Drehen des Dummys 54 können verschiedene Positionierungen zum Fahrzeug 12 geprüft werden.

Zum Erkennen von Hindernissen und Grenzabständen zu dem ersten Objekt 12 weist die Messeinrichtung 10 Abstandssensoren 60 in Form von vorzugsweise Ultraschallsensoren auf, die an einer Unterseite 62 eines Tragrahmens 64 umlaufend angeordnet sind. Ferner sind sogenannte Lidar-Sensoren 66 auf einer Oberseite 68 des Tragrahmens 62 angeordnet.

Zur Navigation über ein GPS-System 70 ist eine GPS-Antenne 72 sowie ein GPS-Sensor 74 auf einer Oberseite 76 des Fahrgestells 50 angeordnet. Zur drahtlosen Kommunikation ist eine LTE-/WLAN-Antenne 78 vorgesehen. Für eine Indoor-Navigation sind Sensoren 80, vorzugsweise Ultraschallsensoren, wie Zeroky-Sensoren, auf der Oberseite 76 angeordnet, die in Verbindung mit entsprechenden Sendern 82, vorzugsweise Ultraschallsender, wie Zeroky-Sender, die z. B. an einer Hallendecke oder in Standsäulen angeordnet sind, die Position der Messeinrichtung 10 aufzeichnen (tracken).

Zur Positionierung des Benutzerobjektes 14 relativ zu dem Fahrzeug 12 ist an dem Roboterarm 44 eine Roboterhand 84 mit integrierter Messsensorik angeordnet.

Fig. 3 zeigt eine dreidimensionale Darstellung der Roboterhand 84, die mittels des 7-Achs-Roboterarms 44 positionierbar ist. Die Roboterhand 84 umfasst eine Aufnahme 86 für das Benutzerobjekt 14 in Form eines Mobiltelefons oder eines Funkschlüssels. Die Aufnahme 86 ist in Form eines Schnellwechselsystems zum schnellen und hochgenauen Wechseln von verschiedenen Aufnahmen ausgebildet. Zwischen der Aufnahme 86 und einem Flansch 88 des Roboterarms 44 ist ein FT-Sensor 90 zur Messung von Kräften und Momenten angeordnet.

Die Messsensorik umfasst einen Lasersensor 92 zur Abstandsmessung, eine 2D-Kamera 94 zur Erkennung von Marken und eine ToF-Kamera 96 (Time-of-Flight-Sensor) zum Einmessen in eine Punktwolke, wie nachfolgend erläutert wird.

Fig. 4 zeigt eine dreidimensionale Darstellung eines Abschnitts der Prüfvorrichtung 10 mit dem Drehteller 54, auf dem die menschliche Attrappe 52 fixiert ist, um diese in verschiedene Positionen einstellen zu können.

Der Erfindung liegt der Gedanke zugrunde, mittels der Messeinrichtung 10 in vorgegebenen Prüfpositionen PP Datensätze zu generieren, um eine vorgeschriebene positions- und/oder abstandsbezogene Funktion des Fahrzeugs validieren zu können.

Zum Generieren der Datensätze wird das Benutzerobjekt 14 mittels der Messeinrichtung 10 an vorgegebene Prüfposition PP im Innenraum oder Außenraum des Fahrzeugs 12 positioniert, z. B. im Außenbereich in einer Entfernung von 2 m, 5 m oder 10 m von dem Fahrzeug 12 entfernt oder über Sternfahrten zum Fahrzeug 12 hin.

Die Messung erfolgt nach einem Prüfablauf. Der gesamte Prüfablauf für die Messeinrichtung 10 wird in einem CAD-System in einer virtuellen Simulation erstellt. Die optimierten Simulationsergebnisse werden in die Messeinrichtung 10 übertragen. Sobald das Benutzerobjekt 14 eine der Prüfpositionen PP erreicht hat, werden die Koordinaten des Benutzerobjektes als erste Daten gespeichert. Gleichzeitig wird die Position und/oder die Abstände des Benutzerobjektes 12 zu den Sensoren mit den Sensoren 16 bis 26 des Fahrzeugs 12 erfasst. Die Sensoren 16 bis 26 erzeugen zweite Daten, die die von den einzelnen Sensoren 16 bis 26 gemessenen Abstände A1 bis A6 zu einem Zeitpunkt T1 umfassen. Die Signale der Sensoren werden über den Bus 28 in die Steuereinheit 30 kommuniziert und als zweite Daten gespeichert.

Die Koordinaten der Prüfposition PP als erste Daten und die in der Prüfposition PP gemessenen Abstände und/oder die gemessene Position als zweite Daten werden in einem neu generierten Datensatz zeitgenau zusammengeführt. Die Koordinaten des Benutzerobjektes 14 können über eine Transformationsvorschrift in ein Fahrzeugkoordinatensystem KS transformiert und in einer Tabelle zusammen mit den gemessenen Abständen A1 bis A6 oder der Position und den Koordinaten der Prüfposition PP dargestellt werden. Auf der Basis der Datensätze kann somit auf der Basis der bekannten Abstände und/oder Positionen für jede Prüfposition PP eine Validierung erfolgen, ob die Sensoren 16 bis 26 die Position des Benutzerobjektes 14 relativ zum Fahrzeug 12 oder in dem Fahrzeug 12 zutreffend in Fahrzeugkoordinaten erkennen, um eine vorgeschriebene Abstandsfunktion auslösen zu können.

Zur Vorbereitung wird die Messeinrichtung 10 sowie das Fahrzeug 12 in der Simulation in einem CAD-System dargestellt und ihre Daten in die Simulation übertragen, wie in Fig. 5 dargestellt. Der Prüfablauf und alle Wege- und Prüfpositionen werden in der Simulation simuliert, wie dies an sich aus EP 2 216 144 A1 an sich bekannt ist, deren Inhalt vollumfänglich in vorliegende Anmeldung aufgenommen wird.

Zum Einmessen des Fahrzeugs 12 werden Marker 98, 100, 102 auf die Oberfläche des Fahrzeugs 12 positioniert, wie geklebt. Die Positionen der Marker 98, 100, 102 werden im CAD-System bestimmt. Vorzugsweise werden mehrere, z. B. drei, Einmesspositionen bestimmt, wie linke Tür, Heckklappe und rechte Tür.

In der Simulation wird der Messablauf eingelernt (geteacht), insbesondere der Messablauf im Innenbereich und das Abfahren der Oberflächen, Gitterfahrten oder Sternfahrt.

Das Einmessen der Messeinrichtung 10 in die Messebene erfolgt mittels akustischer Sensoren 80, wie Zeroky-Sensoren, die auf der Oberfläche 76 angeordnet sind und mit den im Raum verteilten Sendern 82, wie Zeroky-Sendern, kommunizieren, wodurch die genauen Koordinaten des Benutzerobjektes 14 an der Roboterhand 84 oder des Mess-Dummys bekannt sind. Wird die Messeinrichtung 10 über das Zeroky-System navigiert, kann das Fahrzeug 12 auch über das Zeroky-System eingemessen werden, wobei Zeroky-Sensoren auf einer Oberfläche, z. B. Dachfläche, des Fahrzeugs angeordnet werden.

Der Messablauf ist wie folgt:
In einem ersten Schritt wird die Messeinrichtung 10 im Sichtbereich der Marker 98, 100, 102 vorzugsweise manuell vor dem Fahrzeug 12 positioniert.

In einem zweiten Schritt erfolgt ein selbstständiges Eingemessen des Fahrzeugs 12 aus mindestens einer Position, vorzugsweise aus drei Positionen für höhere Genauigkeit. Zum automatischen Einmessen müssen alle weiteren Einmesspositionen der Prüfvorrichtung 10 sowie Wegpositionen zwischen den Einmesspositionen vorher eingelernt (geteacht) werden.

Dass Einmessen des Fahrzeugs 10 wird mit den aufgeklebten Markern 98, 100, 102 in Verbindung mit der Kamera 94 und dem Laser 92 durchgeführt. Die Prüfvorrichtung 10 positioniert automatisch gesteuert die Kamera 94 z. B. auf den Marker 98 und positioniert den Laserstrahl des Lasers 92 in die Mitte des Markers 98. Alle weiteren Marker 100, 102 auf der Fahrzeugfläche rund um das Fahrzeug 12 werden von der Prüfvorrichtung 10 automatisch angefahren.

Alternativ werden z. B. drei Positionen manuell angefahren, wobei die Position des Fahrzeugs im Zeroky-System oder GPS-System bekannt ist.

Die Kamera 94 erkennt die Marker 98, 100, 102 und bestimmt die relative Lage zwischen der Prüfvorrichtung 10 und dem Fahrzeug 12.

Nach dem Einmessen ist die Position des Fahrzeugs 12 zeitlich unabhängig, sodass das die Prüfvorrichtung 10 zu jeder Zeit das Fahrzeug 12 finden kann bzw. Positionen relativ zum Fahrzeug 12 angefahren werden können. In diesem Zusammenhang ist anzumerken, dass jede weitere Einmessposition die Genauigkeit der Messungen erhöhen kann.

Durch das Einmessen ist zudem jede beliebige Transformation in das Benutzerobjekt 14 bzw. die Messeinrichtung 10 oder jedes weitere Objekt, wie Mess-Dummy 52, auf der Messeinrichtung 10 möglich ist. Die Transformation kann von einer Software, wie z. B. "RobFlow" (eingetragene Marke), als Input an die Messeinrichtung 10 übergeben werden, so dass die Position des Benutzerobjektes 14 in Echtzeit (live) nachverfolgt (getrackt) werden kann.

Damit das Ankersystem die genaue Position bestimmen kann, werden die Anker eingelernt, indem das zweite Objekt mittels des mobilen Roboters über eine zuvor in der Simulation eingelernte Oberfläche des ersten Objektes geführt wird, wobei die Robotersteuerung ein Startsignal liefert, so dass während der Messfahrten die Positions- und Entfernungsdaten der Anker zeitgenau mit den Prüfpositionen aufgezeichnet werden können.

Fig. 5 zeigt die Messeinrichtung 10 beim Generieren von Datensätzen. Das Generieren der Datensätze besteht nun darin, dass die Messeinrichtung 10 das Benutzerobjekt 14 an vorgegebenen Prüfpositionen PP, d. h. Raumpunkten im Innenraum oder Außenraum des Fahrzeugs 12, positioniert. Die Prüfpositionen PP bilden eine das Fahrzeug umhüllende Punktwolke.

Die Positionierung des Benutzerobjektes 12 kann aus der Gruppe Anfahren definierter Prüfpositionen PP am oder im Fahrzeug 12, z. B. im Außenbereich 2 m, 5 m oder 10 m von dem Fahrzeug 12 entfernt, Sternfahrten zum Fahrzeug, Abfahren eines Punktgitters, d. h. Gitter von Prüfpositionen, Abfahren einer Fahrzeugoberfläche, Bewegen in Richtung einer Fahrzeugoberfläche, wie Fenster, und/oder Anfahren definierte Prüfpositionen im Innern des Fahrzeugs 12.

Sobald das Benutzerobjekt 14 eine gewünschte Prüfposition erreicht hat, wird diese mit den Sensoren 16 bis 26 am Fahrzeug 14 erfasst. Die Sensoren messen jeweils einen Abstand A1 bis A6, der über ein Signal, vorzugsweise als Bus-Signal, über den Bus 28 an die Steuereinheit 30 übertragen wird. Die Abstands- und/oder Positionsinformation der Sensoren 16 bis 26 werden in der Steuereinheit als zweite Daten gespeichert.

Vorzugsweise werden in der Messeinrichtung 10 während des Messvorgangs die Koordinaten der Prüfposition des Benutzerobjektes 14 als erste Daten mit einem ersten Zeitstempel aufgezeichnet. Vorzugsweise werden in der Steuereinheit 30 des Fahrzeugs 12 die von den Sensoren 16 bis 26 gemessenen Abstände und/oder die gemessene Position als zweite Daten mit einem zweiten Zeitstempel erfasst.

Die Koordinaten der Prüfposition als erste Daten, bekannt aus der Robotersteuerung, und die Abstands- und/oder Positionsinformationen der Sensoren als zweite daten, werden zeitgenau zusammengeführt, so dass für jede Prüfposition PP die Koordinaten des Benutzerobjektes 14 im Koordinatensystem des Fahrzeugs 12 und die Abstände und/oder Positionen der zweiten Daten in einer Tabelle dargestellt werden können. Damit lässt sich auf einfache Weise das Prüfergebnis validieren, nämlich ob die Spezifikation erfüllt ist oder nicht.

Die Prüfung kann in Form von Sternfahrten erfolgen. Dies bedeutet, dass das Benutzerobjekt 14 mittels der Messeinrichtung 10 in Richtung eines Mittelpunktes des Fahrzeugs 14 bewegt wird. Während der Fahrt erfolgten ein simultanes Aufzeichnen der Positionen des Benutzerobjektes 14 und der Signale, wie Bus-Signale. Die Geschwindigkeit, mit der Messeinrichtung 10 in Richtung des Fahrzeugs 12 Verfahren wird, kann im Bereich von 0,5 m/s bis 2, 5 m/s liegen. Es erfolgt somit eine dynamische Messung.

Alternativ können die Prüfpositionen PP in Form von Gitterpunkten definiert und abgefahren werden, wie in Fig. 6 dargestellt. Dabei wird das Benutzerobjekt 14 mittels der Messeinrichtung 10 auf eine zuvor definierte Prüfposition PP positioniert. Ungenauigkeiten beim Anfahren der Zielposition der Messeinrichtung 10 werden mittels des Roboterarm 44 korrigiert. An den Prüfpositionen des Gitters wird sodann das Signal überprüft.

Ein weiteres Verfahren besteht darin, dass eine Fahrzeugoberfläche abgefahren wird. Dabei wird eine zuvor in der Simulation eingelernte Oberfläche mit dem Benutzerobjekt 14 mittels der Messeinrichtung 10 abgefahren. Dafür wird die Messeinrichtung 10 vor der Oberfläche positioniert und der Roboterarm 44 fährt das Benutzerobjekt 14 über die Oberfläche, wie in Fig. 6 dargestellt.

Auch besteht die Möglichkeit das Benutzerobjekt 14 langsam an definierte Prüfpunkte auf eine Fahrzeugoberfläche, wie z.B. eine Fensterfläche, zu bewegen. Dadurch kann eine Innenraumerkennung getestet werden. Bei der Bewegung des Benutzerobjektes 14 werden gleichzeitig die Signale bzw. die Datensätze erfasst, wodurch ein genaues Validieren der Innenraumerkennung ermöglicht wird.

Eine weitere Prüfung besteht darin, definierte Prüfpositionen im Fahrzeuginnern anzufahren. Dabei werden zuvor in der Simulation eingelernte Abläufe genutzt, um des Benutzerobjekt 12 im Fahrzeuginnern zu positionieren. Während der Positionierung werden die Signale und die erzeugten Datensätze der Sensoren aufgezeichnet, sodass die Lokalisierung/Positionierung des Benutzerobjektes 12 validiert werden kann. Bei diesem Verfahren kann sowohl die Innenraumerkennung erfasst als auch die genaue Position des Benutzerobjektes 12 aus den Signalen der Sensoren 16 bis 26 ermittelt werden.

## Patentansprüche

1. Verfahren zum Generieren von Datensätzen vor, an und/oder in einem ersten Objekt, wie Fahrzeug, bei einer Interaktion mit einem zweiten Objekt, wie Mobiltelefon oder Funkschlüssel, mittels einer Messeinrichtung zur Validierung von abstandsbezogenen Funktionen des ersten Objektes bei Annäherung des zweiten Objektes, umfassend die Verfahrensschritte:
• Positionieren des zweiten Objektes mittels der Messeinrichtung an Prüfpositionen im Bereich des ersten Objektes
• Bestimmen von Koordinaten des zweiten Objektes für jede der Prüfpositionen mit einem Zeitstempel, insbesondere mittels der Messeinrichtung, und Speichern der Koordinaten des zweiten Objektes für jede der Prüfpositionen mit dem Zeitstempel als erste Daten,
• Bestimmen, mittels Sensoren des ersten Objektes, in jeder Prüfposition Abstände und/oder Position des zweiten Objektes relativ zu den Sensoren mit einem Zeitstempel, wobei die Sensoren ortsmäßig zueinander, zu dem ersten Objekt und zu der Messeinrichtung in Beziehung stehen und Speichern der Abstände und/oder Position für jede der Prüfpositionen mit dem Zeitstempel als zweite Daten und
• Generieren eines Datensatzes durch zeitliches Zusammenführen der ersten Daten und der zweiten Daten mit jeweils gleichem Zeitstempel.

2. Verfahren nach Anspruch 1,
**dadurch gekennzeichnet,**
**dass** die ortsmäßige Beziehung der Sensoren eingelernt wird, indem das zweite Objekt mittels der Messeinrichtung über zuvor in einer Simulation eingelernte Bereiche, wie Oberflächenbereiche, des ersten Objektes geführt wird, wobei die Messeinrichtung ein Startsignal liefert, so dass während Messfahrten die Positions- und Entfernungsdaten der Sensoren zeitgenau mit den Prüfpositionen aufgezeichnet werden.

3. Verfahren nach Anspruch 1 oder 2,
**dadurch gekennzeichnet,**
**dass** die Bestimmung der Abstände und/oder der Position des ersten Objektes in Form eines Sender-Empfängers, insbesondere Mobiltelefon oder Funkschlüssel, über ein die Sensoren aufweisendes Ankersystem erfolgt, welches eine Mehrzahl von Sensoren in Form von Ultra-Wideband (UWB, Ultra-Breitband)-Antennenmodule aufweist, die in dem ersten Objekt, wie Fahrzeug, z. B in Stoßstangen, Türen, Armaturenbrett, Dachflächen, Kofferraum, Motorraum, angeordnet sind.

4. Verfahren nach zumindest einem der vorhergehenden Ansprüche,
**dadurch gekennzeichnet,**
**dass** das erste Objekt eine Steuereinheit umfasst, die ausgebildet ist, eines über die Mehrzahl von Antennenmodulen empfangenen UWB-Signals des Sende-Empfängers auszuwerten und eine Position oder einen Abstand des Sende-Empfängers relativ zu dem ersten Objekt zu bestimmen und die Position oder die Abstände in der Steuereinheit als die zweiten Daten zu speichern oder über eine Kommunikationsverbindung an die Messeinrichtung zu übertragen.

5. Verfahren nach zumindest einem der vorhergehenden Ansprüche,
**dadurch gekennzeichnet,**
**dass** das erste Objekt, das zweite Objekt sowie die Messeinrichtung in der Simulation simuliert werden, wobei der gesamte Prüfablauf und alle Wege- und Prüfpositionen für die Messeinrichtung in einer virtuellen Simulation erstellt und optimiert wird, wobei die optimierten Simulationsergebnisse in die Steuerung der Messeinrichtung übertragen werden.

6. Verfahren nach zumindest einem der vorhergehenden Ansprüche,
**dadurch gekennzeichnet,**
**dass** das zeitliche Zusammenführen der ersten und zweiten Daten dadurch erfolgt, dass die ersten Daten, d. h. der Koordinaten bzw. der Position des zweiten Objektes und/oder der Messeinrichtung, mit einem ersten Zeitstempel aufgezeichnet werden und dass die zweiten Daten, d. h. die von den Sensoren gemessenen Abstände und/oder gemessene Position, mit einem zweiten Zeitstempel aufgezeichnet werden.

7. Verfahren nach zumindest einem der vorhergehenden Ansprüche,
**dadurch gekennzeichnet,**
**dass** das zweite Objekt mittels eines mobilen, selbstfahrenden Roboters als die Messeinrichtung positioniert wird und/oder dass das zweite Objekt, wie Mobiltelefon oder Funkschlüssel, von einer Roboterhand eines von dem mobilen Roboter ausgehenden Roboterarms gehalten oder an einem auf dem mobilen Roboter angeordneten, vorzugsweise drehbaren, Dummy positioniert ist, der vorzugsweise Dämpfungseigenschaften eines menschlichen Körpers simuliert.

8. Verfahren nach zumindest einem der vorhergehenden Ansprüche,
**dadurch gekennzeichnet,**
**dass** das erste Objekt, wie Fahrzeug, durch den mobilen Roboter eingemessen wird, indem Positionen von Markern bestimmt werden, die auf dem ersten Objekt angeordnet, wie aufgeklebten, sind, wobei vorzugsweise eine in der Roboterhand des mobilen Roboters integrierte Kamera auf einen der Marker positioniert wird und ein in der Roboterhand integrierter Laser einen Laserstrahl auf den Marker, vorzugsweise auf den Mittelpunkt, ausrichtet.

9. Verfahren nach zumindest einem der vorhergehenden Ansprüche,
**dadurch gekennzeichnet,**
**dass** der mobile Roboter im Außenbereich über ein Outdoor-Navigationssystem, wie GPS-System, navigiert und/oder dass der mobile Roboter im Innenbereich über ein Indoor-Navigationssystem, wie Zeroky-System, navigiert, wobei Sensoren, wie Ultraschallsensoren, einerseits an dem mobilen Roboter und andererseits in einem den mobilen Roboter umgebenden Gebäude angeordnet sind und/oder dass der mobile Roboter über das Indoor-Navigationssystem in eine Messebene eingemessen wird, um die genauen Koordinaten des zweiten Objektes an der Roboterhand oder an dem Dummy zu bestimmen.

10. Verfahren nach zumindest einem der vorhergehenden Ansprüche,
**dadurch gekennzeichnet,**
das erste Objekt, wie Fahrzeug, durch das Navigationssystem, wie Zeroky-System, eingemessen wird, wobei erste Sensoren, wie Ultraschallsensoren, auf dem ersten Objekt, wie Dachoberfläche, angeordnet werden, deren Positionen über Sender, wie Ultraschallsender, die in dem das erste Objekt aufnehmenden Gebäude, z. B: an der Gebäudedecke oder in Standsäulen, installiert sind, erfasst werden.

11. Verfahren nach zumindest einem der vorhergehenden Ansprüche,
**dadurch gekennzeichnet,**
**dass** das Positionieren des zweiten Objektes ein Annähern des zweiten Objektes in Richtung eines Koordinatenmittelpunktes des ersten Objektes umfasst, wobei die Koordinaten des zweiten Objektes und die Daten des ersten Objektes simultan aufgezeichnet werden und/oder dass das Positionieren des zweiten Objektes ein Positionieren des zweiten Objektes in definierten Prüfpositionen (Punktgitter) umfasst, wobei in jeder Prüfposition die zweiten Daten erzeugt werden und/oder dass das Positionieren des zweiten Objektes ein Abfahren von Oberflächen des ersten Objektes mit dem zweiten Objekt umfasst und/oder dass das Positionieren des zweiten Objektes ein Bewegen des zweiten Objektes entlang definierter Prüfpositionen in Richtung auf eine Oberfläche, wie Fensterfläche, des Objektes zu und/oder in einen Innenraum des ersten Objektes hinein umfasst.

12. Verfahren nach zumindest einem der vorhergehenden Ansprüche,
**dadurch gekennzeichnet,**
**dass** das zweite Objekt über zuvor eingelernte Prüfabläufe im Innern des ersten Objektes positioniert wird, wobei die Signale der Sensoren aufgezeichnet werden um die Positionierung des zweiten Objektes zu validieren.

13. Verfahren nach zumindest einem der vorhergehenden Ansprüche,
**dadurch gekennzeichnet,**
**dass** die in dem ersten Objekt aufgezeichneten zweiten Daten mit den in der Messeinrichtung aufgezeichneten ersten Daten ausgetauscht oder synchronisiert werden und dass zur Synchronisation der ersten und zweiten Daten eine, vorzugsweise drahtlose, Kommunikation zwischen dem ersten Objekt und der Messeinrichtung durchgeführt wird, insbesondere ein Starten, Lesen und/oder Stoppen der in dem ersten Objekt erzeugten Daten.

14. Messeinrichtung zum Generieren von Datensätzen vor, an und/oder in einem ersten Objekt, wie Fahrzeug, bei einer Interaktion mit einem zweiten Objekt, wie Mobiltelefon oder Funkschlüssel, zur Validierung von abstandsbezogenen Funktionen des ersten Objektes bei Annäherung des zweiten Objektes, wobei die Messeinrichtung ausgebildet ist:
• Zum Positionieren des zweiten Objektes an Prüfpositionen im Bereich des ersten Objektes,
• Zum Bestimmen von Koordinaten des zweiten Objektes für jede der Prüfpositionen mit einem Zeitstempel und Speichern der Koordinaten des zweiten Objektes für jede der Prüfpositionen mit dem Zeitstempel als erste Daten,
• Zum Empfangen von zweiten Daten, in Form von Abständen und/oder einer Position des zweiten Objektes relativ zu Sensoren des ersten Objektes für jede der Prüfpositionen, die mittels der Sensoren des ersten Objektes, die ortsmäßig zueinander, zu dem ersten Objekt und zu der Messeinrichtung in Beziehung stehenden, mit einem Zeitstempel bestimmt werden und zum Speichern der zweiten Daten mit einem Zeitstempel,
• Zum Generieren eines Datensatzes durch zeitliches Zusammenführen der ersten Daten und der zweiten Daten mit jeweils gleichem Zeitstempel.

15. Messeinrichtung nach Anspruch 14,
**dadurch gekennzeichnet,**
**dass** die Messeinrichtung ein mobiler, selbstfahrender Roboter ist und/oder dass das zweite Objekt, wie Mobiltelefon oder Funkschlüssel, von einer Roboterhand eines von dem mobilen Roboter ausgehenden Roboterarms gehalten oder an einem auf dem mobilen Roboter angeordneten, vorzugsweise drehbaren, Dummy positioniert ist und/oder dass der Dummy Eigenschaften eines menschlichen Körpers, insbesondere Dämpfungseigenschaften betreffend elektromagnetischer Strahlung, simuliert.
